# FASCICULE DE BREVET EUROPEEN

(11) **EP 1 420 959 B1**
(45) Date de publication et mention de la délivrance du brevet: **29.06.2005**
(21) Numéro de dépôt: 03750827.2
(22) Date de dépôt: 21.07.2003
(51) Int. Cl.: B41M 1/30, C09D 11/02

(54) **PROCEDE DE MARQUAGE PAR TAMPOGRAPHIE ET SUBLIMATION ET ENCRES DE TAMPOGRAPHIE SUBLIMABLES.**
TAMPON- UND SUBLIMATIONSDRUCKVERFAHREN SOWIE SUBLIMIERBARE TAMPONDRUCKFARBEN
METHOD FOR INK PAD AND SUBLIMATION PRINTING AND SUBLIMABLE TAMPOGRAPHIC INKS

(30) Priorité: 22.07.2002 FR 0209259
(43) Date de publication de la demande: 26.05.2004
(73) Titulaire: Gaming Partners International, 21420 Savigny-les-Beaune (FR)
(72) Inventeur: TOLLHUPP, Michel, F-21200 BEAUNE (FR)
(74) Mandataire: Poidatz, Emmanuel
(86) Numéro de dépôt international: PCT/FR2003/002297
(87) Numéro de publication internationale: WO 2004/009366

(56) Documents cités:
- EP-A- 0 570 607
- WO-A-95/19266
- FR-A- 2 501 594
- GB-A- 1 517 832
- US-A- 3 951 892

## Description

La présente invention concerne d'une façon générale le marquage d'un décor sur un objet, tel que, à titre d'exemple non limitatif, un jeton de jeu en forme de disque ou de plaque. Par jeton de jeu, également appelé jeton de casino, on entend tout élément utilisable en salle de jeux et représentant une valeur nominale prédéterminée ou non. D'une façon générale ces jetons sont fabriqués en matière plastique rigide et résistante aux rayures.

Les jetons de jeu font d'une façon quasi-systématique l'objet d'un décor par marquage sur leurs faces et/ou tranches et qui, selon les utilisations futures des jetons, peut aller du plus simple au plus complexe. Pour la suite de l'exposé, le terme décor s'étend dans son sens le plus large et comprend notamment tout dessin, signe, marque et caractère (par exemple lettres, chiffres, codes barres ou codages divers) susceptible de représentation graphique et/ou d'effet visuel ou optique (par exemple par utilisation d'encre U.V.). D'une façon plus précise le décor des jetons est susceptible de remplir au moins une des fonctions multiples présentées rapidement ci-après:
i) une fonction d'identification du jeton et/ou de valeur du jeton et/ou du casino et/ou de la table de jeu et/ou du joueur;
ii) une fonction de décoration à caractère esthétique et/ou de support publicitaire; et
iii) une fonction d'authentification du jeton et de sécurité contre les risques de falsification et/ou de reproduction frauduleuse.

En ce qui concerne le marquage proprement dit, il est possible de distinguer le marquage en épaisseur ou en volume dans le corps du jeton (par exemple marquage dans la masse avec ou sans insert, gravure, multi-injection du corps en matière plastique du jeton etc..), du marquage d'une surface (par exemple impression par sérigraphie mono ou multichrome). L'invention concerne plus particulièrement le marquage de surface.

Parmi les techniques de marquage de surface pour jetons de jeu, on connaît la technique dite de "sublimation". Selon cette technique, on dépose sur une face du jeton un calque ou transfert (par exemple en papier ou en tissu) sur lequel a été imprimé, en général par sérigraphie, le décor (qui peut être multicolore). Le jeton et le calque transfert sont alors disposés dans une presse chauffante, le côté imprimé du transfert étant pressé sur la face du jeton. Sous l'action de la chaleur, l'encre du transfert est sublimée pour venir se déposer sur la surface externe du jeton et migrer dans la matière plastique du jeton sur une profondeur de quelques dizaines de microns, le papier du transfert faisant écran de rétention pour les vapeurs de pigment. D'une façon générale la température de sublimation des pigments colorés se situe selon les couleurs et les encres entre 140 et 180°C. Cette technique qui donne de bons résultats au niveau de l'adhérence du décor n'est pas très précise du fait du passage par un transfert et est assez délicate à mettre en oeuvre notamment compte tenu des risques de déformation du papier transfert lors du passage à la presse chauffante. De plus elle nécessite de sublimer de façon séparée chaque face du jeton et la tranche (la sublimation de la tranche étant par exemple obtenue par chauffage des jetons empilés dans un tube de maintien dont l'intérieur est garni du papier transfert). Enfin il est à remarquer que la technique du marquage par sublimation n'est pas limitée aux jetons de jeu en général ni aux objets-supports de marquage à corps en matière plastique (dans ce dernier cas le corps par exemple en métal est préalablement à la sublimation recouvert d'un revêtement de surface en matière plastique, par exemple un vernis plastique).

La demande internationale publiée WO-A-96/25066 au nom du Demandeur décrit l'utilisation de la tampographie pour le marquage en surface des faces et/ou de la tranche des jetons). En particulier ce document décrit le marquage par tampographie de chaque face du jeton à l'aide d'un tampon encré déplacé coaxialement au jeton avec un marquage de tranche au tampon-rouleau encreur ou, pour les jetons à tranche à profil adouci, un marquage d'une partie de la tranche correspondant au bord chanfreiné ou arrondi de la face du jeton. Cette technique est très satisfaisante du point de vue de la qualité et de la précision du décor (la tampographie autorisant des trames de 175 contre 100-120 par la sérigraphie), mais le décor déposé en surface demande parfois à recevoir en fin de fabrication du jeton un vernis de protection.

La demande de brevet français FR 2501594 montre un procédé de recouvrement de surface de produits synthétiques par un procédé impression par sublimation classique avec transfert à partir d'un support auxiliaire constitué de l'association i) du recouvrement préalable par enduction ou pulvérisation de l'objet à marquer, en l'espèce un textile en fibres naturelles, par une couche de résine thermodurcissable de type (methyl-)acrylate à propriété réticulante notamment sur les polyisocyanates ii) suivi d'un procédé d'impression par sublimation classique (avec thermocompression sur l'objet à marquer d'un support auxiliaire pré-imprimé avec des encres sublimables).

Cette couche de résine thermodurcissable réticulante de type (methyl-)acrylate a pour effets techniques d'une part de protéger le textile en fibres naturelles (de résistance limitée aux hautes températures rencontrées lors de la thermosublimation) des effets de la chaleur et de la pression rencontrés lors de la thermosublimation classique et d'autre part de servir de revêtement de surface récepteur pour les pigments sublimés présents à l'état gazeux.

Selon ce procédé connu, qui ne fait pas appel à la tampographie, la dépose des pigments colorés sur l'objet à marquer a toujours lieu à l'état gazeux lors de la sublimation à partir du support auxiliaire de transfert pré-imprimé et après la dépose de la couche de résine réceptrice thermodurcissable. Lors de la sublimation proprement dite les pigments colorés migrent vers la couche de résine protectrice où ils sont « piégés » par la formation d'un composé d'adjonction avec la résine au niveau des groupes hydrofonctionnels non réticulables.

L'invention a pour but de proposer un procédé de marquage d'un décor sur un objet-support en matière plastique ou à revêtement de surface en matière plastique combinant tampographie et sublimation permettant d'améliorer l'adhérence et la résistance à l'usure d'un décor tampographié tout en gardant les avantages de la tampographie, notamment la précision et la bonne définition du décor généralement obtenues grâce à l'utilisation de la tampographie. Parmi les difficultés à maîtriser, il importe d'une part de réaliser le dépôt par tampographie des pigments colorés sublimables sur la surface à marquer et d'assurer lors de la sublimation la pénétration des pigments en profondeur dans la matière en quantité suffisante pour obtenir la coloration désirée tout en évitant les "bavures" dues à la diffusion parasite des pigments en surface.

A cette fin, l'invention propose un procédé de marquage par tampographie et sublimation d'un objet-support en matière plastique ou à revêtement de surface en matière plastique, caractérisé par:
- une phase de tampographie avec le dépôt sur l'objet-support en une ou plusieurs opérations de tampographie d'une composition de marquage monochrome ou multichrome comprenant au moins un composant pigmenté monocolore comportant de fines particules d'au moins un pigment coloré monocolore sublimable, ladite composition incorporant un composant durcissable résistant à la température de sublimation du ou des pigments colorés de la composition de marquage; et
- une phase de chauffage de sublimation de l'objet-support, de la composition de marquage tampographiée et du composant durcissable incorporé à la composition, à une température au moins égale à la température de sublimation des pigments colorés, le composant durcissable présentant une température de durcissement inférieure à la température de sublimation du ou des pigments pour obtenir un durcissement progressif dudit composant durcissable préalablement au démarrage de la sublimation du ou des pigments colorés.

L'invention propose également un procédé de marquage par tampographie et sublimation d'un objet-support en matière plastique ou à revêtement de surface en matière plastique, caractérisé par:
- une phase de tampographie avec le dépôt sur l'objet-support en une ou plusieurs opérations de tampographie d'une composition de marquage monochrome ou multichrome comprenant au moins un composant pigmenté monocolore comportant de fines particules d'au moins un pigment coloré monocolore sublimable, ladite composition étant recouverte d'un composant durcissable, lequel composant durcissable étant résistant à la température de sublimation du ou des pigments colorés de la composition de marquage; et
- une phase de chauffage de sublimation de l'objet-support, de la composition de marquage tampographiée et du composant durcissable disposé en couverture, à une température au moins égale à la température de sublimation des pigments colorés, le composant durcissable présentant une température de durcissement inférieure à la température de sublimation du ou des pigments pour obtenir un durcissement progressif dudit composant durcissable préalablement au démarrage de la sublimation du ou des pigments colorés. Selon une variante de ce procédé de l'invention le composant durcissable est déposé par tampographie ou par d'autres procédés tels que notamment la sérigraphie ou la pulvérisation.

Selon un mode de mise oeuvre préférentiel de l'invention ledit composant durcissable est principalement constitué d'une base d'encre de tampographie transparente durcissable ou d'un composé analogue.

Ainsi donc le composant durcissable résistant à la température de sublimation des pigments et dont le durcissement progressif intervient préalablement à la sublimation de tous les pigments colorés présents forme un écran évitant l'échappement des vapeurs de pigment dans l'atmosphère environnant et canalise ces dernières vers la surface de l'objet-support à marquer. L'utilisation comme composant durcissable de la base transparente d'une encre de tampographie a montré que le transfert par tampographie des pigments colorés sublimables sur la surface à marquer se réalisait dans de bonnes conditions. Toutefois un composé analogue susceptible de remplir la double fonction d'agent de transfert des pigments par tampographie et d'écran pour les pigments sublimables est tout à fait acceptable.

Bien entendu l'invention n'est pas limitée au marquage des jetons de jeux mais concerne tous les objets susceptibles de recevoir des pigments sublimables par exemple les objets en matière plastique ou les objets en métal revêtus d'une couche de peinture plastique ou d'un matériau approprié. De même en s'affranchissant du papier transfert, il est possible de décorer des objets multifaces par une seule opération de sublimation et/ou des objets de forme plus complexe (avec des surfaces non planes ou non développables).

Selon une première variante du procédé selon l'invention, la base d'encre de tampographie transparente ou le composé analogue présente, sans durcisseur additionnel, une température de durcissement comprise entre 60 et 100°C, de préférence de l'ordre de 80°C.

Selon une autre variante du procédé de l'invention le composant pigmenté est constitué de fines particules de pigments colorés monocolores sublimables susceptibles d'être dispersés directement dans le composant durcissable sans liant. Avantageusement le procédé selon l'invention comporte au moins une opération de dépôt de tampographie d'une composition d'encre monocolore obtenue par mélange sans liant des particules de pigment sublimable constituant le composant pigmenté monocolore et de la base d'encre de tampographie transparente éventuellement accompagnée de diluant. Tout aussi avantageusement cette ou ces opérations de tampographie peuvent être suivies d'un chauffage de sublimation réalisé en enceinte chauffante portée à une température comprise entre 145 et 160°C pendant environ d'une dizaine de minutes. On choisit de préférence 12 minutes à 150°C pour obtenir le meilleur rendu entre les diverses couleurs en fin de sublimation.
Selon une autre variante le procédé selon l'invention est caractérisé par au moins une opération de dépôt de tampographie d'une composition d'encre monocolore obtenue par mélange d'un composant pigmenté monocolore obtenu par dispersion de pigments colorés sublimables dans un liant et de la base d'encre de tampographie transparente éventuellement accompagnée de diluant. Cette opération de tampographie étant suivie d'un chauffage de sublimation réalisé en enceinte chauffante portée à une température comprise de l'ordre de 130°C pendant environ une dizaine de minutes. On notera de la température de sublimation de certains pigments associés à des encres avec liants est plus basse que pour les pigments associés à des encres sans liant, notamment pour certaines encres à liant de la société ATS COLOR sublimables entre 120°C et 130°C.

Cette particularité est utilisée pour le marquage d'objet-support en matériau plastique de faible épaisseur (inférieure ou égale à 1mm) et/ou de faible résistance thermique.

Dans les deux cas (pigments colorés avec ou sans liant), le cliché utilisé pour l'opération de dépôt par tampographie de ladite composition d'encre monocolore est gravé à faible profondeur, de préférence de l'ordre de 20 à 30 µm.

En variante mais toujours dans le cadre de l'invention le chauffage de sublimation est réalisé soit par exposition au rayonnement infrarouge soit à l'aide d'une membrane chauffante sous vide.

Enfin selon l'état et/ou l'aspect de surface désiré, la phase de chauffage de sublimation est suivie d'une opération destinée traiter en surface et/ou à éliminer partiellement ou totalement le film durci de la base d'encre de tampographie transparente ou du composé analogue.

A titre d'application du procédé selon l'invention, celui-ci est utilisable pour le marquage d'un décor de une à quatre couleurs d'un jeton de jeu en matière plastique, les deux faces et la tranche du jeton étant préalablement tampographiées avant une unique opération de chauffage de sublimation.

Pour garantir une uniformité des teintes après sublimation pour une même série d'objets, les objets-supports sont déplacés dans ladite enceinte sur une bande sans fin à vitesse constante selon sensiblement le même cheminement.

De même l'opération de chauffage de sublimation peut être réalisée à l'aide d'une membrane chauffante sous vide.

Selon encore une autre variante du procédé selon l'invention phase de chauffage de sublimation est suivie d'une opération destinée traiter en surface et/ou à éliminer partiellement ou totalement le film durci de la base d'encre de tampographie transparente ou du composé analogue.

Le procédé selon l'invention est utilisé avec profit pour le marquage d'un décor de une à quatre couleurs d'un jeton de jeu en matière plastique de telle façon que les deux faces et la tranche du jeton sont préalablement tampographiées avant une unique opération de chauffage de sublimation.

Toujours selon une autre variante du procédé de l'invention le corps dudit-objet support est réalisé en matière plastique chargée de charge minérale, notamment d'oxyde de zinc et/ou de fibres de Wollastonite. Avantageusement le corps dudit objet-support est réalisé en polyamide, en polyester (notamment PBT) ou en polyacétal (POM) ou porte un revêtement constitué de vernis polyester transparent ou monochrome.

L'invention concerne également des encres de tampographie sublimables utilisables notamment pour la mise oeuvre du procédé de marquage présenté ci-dessus et de ses diverses variantes, comprenant une base d'encre de tampographie transparente durcissable, éventuellement accompagnée de diluant, et des fines particules d'au moins un pigment coloré monocolore sublimable, la base d'encre de tampographie transparente résistante à la température de sublimation du ou des pigments présentant une température de durcissement inférieure à la température de sublimation du ou des pigments pour permettre le commencement d'une phase de durcissement progressif du film d'encre avant le commencement de la sublimation du ou des pigments colorés.

Selon une première variante de l'encre selon l'invention, la base d'encre de tampographie transparente durcissable présente, sans durcisseur additionnel, une température de durcissement comprise entre 60 et 100°C, de préférence de l'ordre de 80°C. Avantageusement la base d'encre est principalement constituée d'un ou plusieurs composés acryliques susceptibles d'être dilués dans un solvant léger non aqueux pour permettre un séchage rapide par évaporation.

Selon un premier mode de réalisation de l'invention, l'encre est obtenue par mélange de la base d'encre de tampographie transparente durcissable, éventuellement accompagné de diluant, avec des particules de pigments colorés monocolores sublimables dispersées sans liant. Dans une composition particulière la concentration en pigments secs colorés sublimables est comprise entre 4 et 20% en poids du produit final, le complément étant principalement constitué de ladite base d'encre de tampographie transparente et de diluant en concentration comprise entre 10 et 25 % en poids du produit final.

Selon un second mode de réalisation de l'invention, l'encre est obtenue par mélange de la base d'encre de tampographie transparente, éventuellement accompagné de diluant, et d'un composant pigmenté sublimable monocolore comportant des pigments colorés sublimables dispersés dans un liant liquide. Toujours dans le cadre de l'invention, le composant pigmenté sublimable est constitué soit par une préparation pigmentée pour encre sublimable utilisable pour l'impression offset de calques ou transferts de sublimation, soit par une préparation pigmentée pour encre sublimable utilisable pour l'impression par sérigraphie de calques ou transferts de sublimation.

De préférence, l'encre de l'invention selon le second mode ci-dessus présente une concentration en composant pigmenté sublimable à liant comprise entre 20 et 40% en poids du produit final, le complément étant principalement constitué de la base d'encre de tampographie transparente et de diluant en concentration comprise entre 10 et 30% en poids du produit final.

Enfin la base d'encre de tampographie transparente comporte avantageusement au moins un additif ou charge lui conférant des propriétés antidérapantes et/ou d'atténuation du brillant de l'encre (agent matant).

D'autres caractéristiques et avantages de la présente invention apparaîtront à la lecture de la description qui va suivre présentée uniquement à titre d'exemple non limitatif en référence aux dessins ci-joints dans lesquels:
- la figure 1 représente le schéma de principe d'une installation de tampographie permettant la mise en oeuvre de l'invention;
- les figures 2a et 2b représentent une opération de tampographie d'une face et de la tranche d'un jeton de jeu entrant dans le procédé marquage de selon l'invention, respectivement avant marquage (figure 2a) et pendant le marquage montrant le tampon comprimé (figure 2b).

A titre de remarque préliminaire, on notera que dans le cadre de cet exposé toutes les compositions et formules sont données en pourcentage poids.

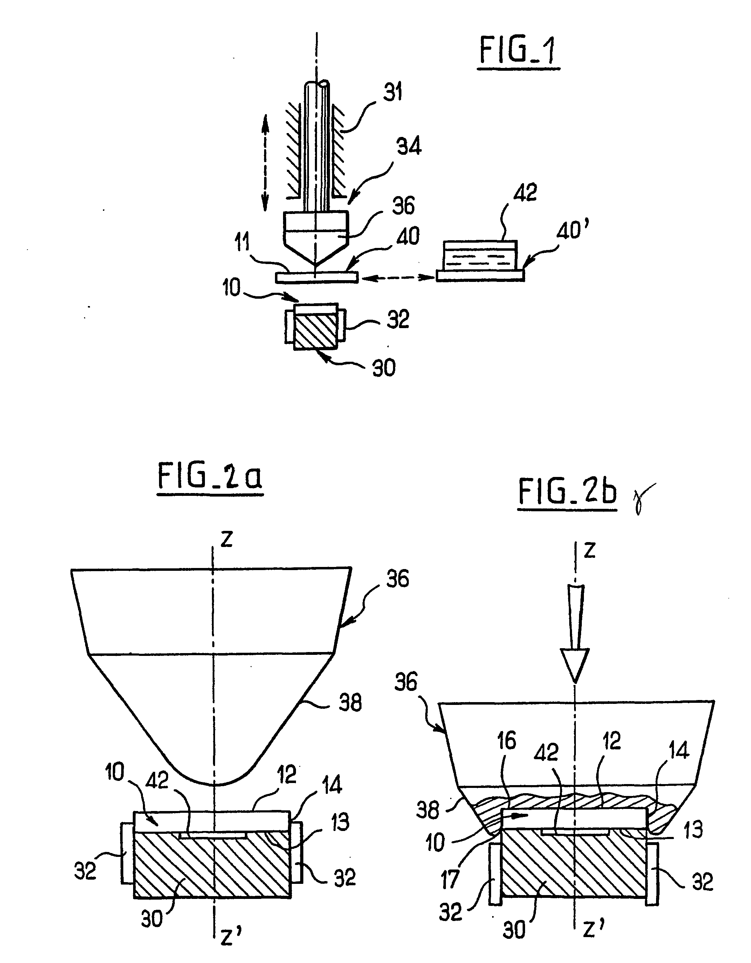

Le procédé de marquage par tampographie et sublimation selon l'invention est ici décrit dans une application au marquage d'un jeton de jeu 10 (illustré de profil sur les figures 1 et 2a et 2b). Le jeton de jeu 10 en matière plastique (par exemple en polyester de préférence en polybutylène téréphtalate PBT éventuellement chargé d'oxyde de zinc et de fibres de Wollastonite) présente une forme générale de disque à faces parallèles 12 et 13 et à tranche droite 14.

Le procédé de marquage par tampographie et sublimation selon l'invention comporte:
- une phase de tampographie avec le dépôt sur un objet-support, en l'occurrence le jeton de jeu en matière plastique, en une ou plusieurs opérations de tampographie d'une composition de marquage monochrome ou multichrome comprenant au moins un composant pigmenté monocolore contenant de fines particules d'au moins un pigment coloré monocolore sublimable et un composant durcissable résistant à la température de sublimation du ou des pigments colorés de la composition de marquage, à titre d'exemple non limitatif un composant durcissable comportant une base d'encre de tampographie transparente durcissable ou un composé analogue, la base d'encre transparente ou le composé analogue présentant une température de durcissement inférieure à la température de sublimation des pigments pour obtenir un durcissement progressif de la base d'encre transparente ou du composé analogue préalablement à la sublimation du ou des pigments colorés; et
- une phase de chauffage de sublimation de l'objet-support, le jeton, de la composition de marquage y compris le composant durcissable à une température au moins égale à la température de sublimation du ou des pigments colorés.

La mise en oeuvre de la phase de tampographie du jeton (faces et tranche) peut être réalisée par divers types de dispositifs, machines ou installations. A titre d'exemple non limitatif la figure 1 illustre le principe d'une installation de tampographie permettant le marquage simultané d'une des faces et de la tranche d'un jeton de jeu en forme de disque ou d'un objet de forme analogue. A titre d'exemple le jeton 10 présente un diamètre de 40 mm pour une hauteur de tranche ou épaisseur de 3 mm. Les faces des jetons sont en général planes et parallèles à surface lisse ou légèrement « granitées » (dotées de micro-aspérités).

Si l'on considère la figure 1, la référence 30 représente un socle horizontal destiné à servir d'appui au jeton 10. Un tampon encreur 34 est monté sur un bâti 31 de façon à être déplaçable selon des mouvements verticaux alternatifs. Le tampon 34 présente une tête déformable 36 à symétrie axiale d'axe ZZ' en matériau synthétique (caoutchouc synthétique siliconé), en l'espèce à bout conique 38. Comme il apparaîtra ci-après la tête déformable 36 est adaptée pour se caler sur la face 12 et l'arête 16 du jeton 10 lors du marquage de la tranche droite 14. Un porte-cliché 40 porteur d'un cliché encreur plan 11 intégrant l'image d'un décor de tranche est susceptible de mouvements alternatifs entre la verticale du tampon 34 (position 40) et la verticale d'un réservoir 41 d'encre monocolore sublimable présentée ci-après (position 40').

L'opération de tampographie proprement dite est réalisée de la façon suivante. Après encrage du cliché 11 (position 40') le porte-cliché est déplacé dans la position 40 coaxiale au tampon 34 de façon à disposer la zone en forme de couronne 20 du cliché 11 coaxialement au tampon 34. Un premier mouvement vertical descendant du tampon 34 permet de récupérer l'encre par simple pression. Après remontée du tampon 34 et retrait du porte-cliché (vers la position 40'), le tampon 34 subit un second mouvement vertical descendant pour déposer l'encre par pression d'abord sur la face 12 du jeton 10 puis, par déformation plus importante de la tête du tampon 36, sur la tranche 14. On réalise ainsi le marquage d'un décor (final ou intermédiaire) monochrome. Dans le cas d'un décor final on parle d'impression « à plat ».

Pour la multichromie, notamment la quadrichromie avec pour couleurs fondamentales le jaune, le bleu cyan, le rouge magenta et le noir, le décor final est constitué par complémentarité et/ou superposition de décors monochromes, chacun de ces décors intermédiaires étant gravé sur un cliché distinct. On utilise pour le marquage multichrome soit plusieurs porte-clichés mobiles soit une série d'unités de tampographie monochrome associée avec un socle porte-jeton mobile.

En ce qui concerne la profondeur de gravure des clichés, celle-ci est en général, comme pour de la tampographie classique, comprise entre 25 et 30µm suivant le type d'installation (encrier ouvert ou fermé) et le type de décor à marquer (tramé ou non). Toutefois selon l'invention il est possible de réduire la profondeur à la gravure autour de 20µm pour ne transférer que le minimum d'encre nécessaire à la sublimation et réduire ainsi au minimum la base transparente résiduelle.

On notera à ce stade de la description que les encres de couleur utilisées en quadrichromie sont plus pâles, pour tenir compte du fait de la superposition de quatre couches d'encre, que celles utilisées normalement en monochromie sur une seule couche.

Comme on peut le constater sur les figures 2a et 2b, le jeton est maintenu centré sur l'axe ZZ' du tampon par des coulisseaux de centrage verticaux escamotables 32 à parois interne courbes complémentaires à la tranche 14 du jeton 10. Cette opération de centrage en phase initiale du marquage est importante pour bien positionner le jeton 10 par rapport au tampon 38, notamment pour que l'arête 16 corresponde bien avec son image encrée sur le bout conique 38 du tampon 34. Après dépassement par le bout conique 38 du plan de la face 12, les coulisseaux de centrage 32 s'escamotent progressivement (par l'intermédiaire d'un quelconque agencement mécanique connu) pour permettre à la tête du tampon 38 de se déformer le long de la tranche 14 en se calant sur l'arête 16 jusqu'à l'encrage total de la tranche 14 lorsque le bout 38 (conique au repos) de la tête déformable 36 du tampon 34 est comprimé (avec un léger dépassement du rebord de la tête 36 au-delà du plan de l'arête 17 de la face inférieure 13 du jeton 10). Enfin pour éviter le soulèvement du jeton 10 lors du retrait du tampon 34 est prévue une pastille adhésive 42 fixée au socle 30 en contact avec la face inférieure 13 du jeton 10.

Après marquage et séchage superficiel de la face 12 et de la tranche 14 du jeton, le jeton 10 est retourné pour le marquage de la face 13 et dans ce cas les coulisseaux 32 sont maintenus en position haute telle qu'illustrée sur la figure 2a.

En ce qui concerne les encres utilisables dans le cadre de la présente invention on peut distinguer deux types d'encre, les encres à pigments colorés directement mélangés à la base d'encre transparente durcissable (dites encres sans liant) et les encres obtenues par mélange de la base d'encre transparente durcissable avec un liant liquide chargé en pigments colorés (dites encres avec liant). D'une façon générale les encres sans liant sont plus difficiles à préparer que les encres avec liant mais donnent de meilleurs résultats au niveau de l'intensité des couleurs, plus forte, et de la netteté du dessin du décor obtenu en quadrichromie (quasi élimination des bavures d'encres latérales). En pratique, à l'exception du diluant volatil, la présence d'un pourcentage notable d'un composant non durcissable dans une encre a pour effet de réduire l'intensité des couleurs et d'augmenter les risques de bavures.

Afin d'éviter la pose d'une couche superficielle de composant durcissable (sous-opération supplémentaire) et d'avoir à éliminer une base d'encre non durcissable lors de l'opération de sublimation, il est avantageux d'utiliser directement une base d'encre transparente durcissable progressivement à une température inférieure à la température de sublimation des pigments colorés associés (entre 130°C et 180°C), étant fait remarquer que la température de sublimation peut également varier avec la nature de la matière du support (en particulier les fibres de Wollastonite facilitent la diffusion des pigments sublimés dans le corps en PBT d'un jeton).

On étudiera d'abord les principaux composants des encres sans liant, bases d'encre et pigments puis quelques compositions d'encres à titre d'exemple.

### Les bases d'encre :

D'une façon générale les bases d'encre de tampographie utilisées présentent des propriétés thermodurcissables.

La base d'encre de tampographie transparente durcissable est choisie résistante à la température de sublimation des pigments et de façon à avoir, sans durcisseur additionnel, une température de durcissement inférieure à la température de sublimation de tous les pigments colorés auxquels elle est associée, par exemple une température de durcissement de l'ordre de 80°C à comparer avec une température de sublimation des pigments en général comprise entre 130 et 180°C (180°C correspondant à des encres fluorescentes).

Parmi les bases d'encre de tampographie transparentes durcissables disponibles sur le marché et utilisables dans la présente invention on peut citer:
- la base d'encre TO/10 de la société PRINTING International (Belgique)
- la base d'encre de tampographie transparente de type R de la société TAMPOPRINT GmbH (Korntal, Allemagne);
- la base d'encre de tampographie de la société SERICOL (Trappes, France)
- la base d'encre de tampographie de la société TIFLEX (Poncin, France).
   D'une façon générale les résines acryliques (sans durcisseur), à faible viscosité et susceptibles d'être diluées dans un solvant léger à séchage rapide par évaporation peuvent convenir comme base d'encre dans le cadre de la présente invention. De préférence on utilisera des résines à solvant non aqueux, les solvants aqueux étant incompatibles avec les tampons siliconés hydrophobes et présentant des temps de séchage trop longs.
   A ces résines sont associés d'une part le diluant ou solvant correspondant (par exemple, le diluant TO/10 A pour la résine TO/10) et d'autre part de façon éventuelle un agent matant (par exemple, l'agent matant commercialisé sous la dénomination AEROSIL 200 par la société DEGUSSA (Allemagne) pour atténuer la brillance de la couche de base d'encre durcie formant vernis d'une épaisseur de 20 à 80 µm.
   On notera que le diluant bien souvent adapté à une base d'encre de tampographie transparente donnée est en général disponible chez le fabricant de la base. Le diluant à pour notamment but de rendre l'encre dans un état de viscosité optimum et si nécessaire d'éclaircir la teinte colorée pour le meilleur transfert possible par tampographie et dépend également du matériel utilisé (notamment du tampon généralement en caoutchouc siliconé) et des conditions ambiantes du milieu environnant (température et humidité).
   Bien entendu des composés durcissables, notamment thermodurcissables, analogues à ces bases d'encres de tampographie transparentes durcissables sont utilisables dans le cadre de l'invention, notamment des composés à base de polyesters thermodurcissables (ou de leurs copolymères) résistante à la température de sublimation des pigments et présentant une température de durcissement relativement basse, dans la mesure où ces composés se mélangent sans réaction à la préparation pigmentée sublimable et permettent le transfert du mélange pigmenté par tampographie sur le support à décorer.

### Les pigments colorés

Tous les pigments colorés pour encre sans liant sont choisis sublimables à partir de 145°C et utilisés au départ sous forme de fines particules de pigments secs. Ces pigments font l'objet d'un broyage très poussé en particulier à l'aide de broyeurs à billes pour obtenir des particules inférieures au micron.

Les pigments colorés jaune, rouge magenta et bleu cyan commercialisés sous la dénomination SUBLAPRINT par la société AAKO-BV (Pays-Bas) ont donnés de bons résultats. Il en est de même pour pigments colorés noirs de la société KEYSTONE (Chicago USA). Il est à noter que les pigments noirs peuvent être soit intrinsèquement de couleur noire soit obtenus par mélange de particules des trois couleurs jaune, rouge et cyan.

Avec ces pigments sont également utilisés en faible quantité un agent dispersant, notamment un dispersant commercialisé sous la dénomination DISPERBIK 161 par la société BYK-Chemie GmbH (Allemagne) et un agent gélifiant pour assurer aux encres de diverses couleurs sensiblement la même viscosité.

### Compositions d'encres sans liant (en pourcentage poids)

Des résultats satisfaisants ont été obtenus à partir des compositions générales suivantes :

Toutes Couleurs sauf Noir :

| | | |
|---|---|---|
| Base d'Encre TO/10 | de 60 | à 70 % |
| Pigments Colorés secs | de 4 | à 10 % |
| Agent Dispersant | de 2,5 | à 5 % |
| Agent Gélifiant | de 2 | à 3 % |
| Agent Matant | de 5 | à 7 % |
| Diluant* | de 9 | à 15 % |

| | | |
|---|---|---|
| *(en quantité suffisante pour 100) | | |

### Couleur Noir

| | | |
|---|---|---|
| Base d'Encre TO/10 | de 48 | à 58 % |
| Pigments Colorés secs | de 13 | à 19 % |
| Agent Dispersant | de 7 | à 10 % |
| Agent Gélifiant | de 2 | à 3 % |
| Agent Matant | de 5 | à 5 % |
| Diluant* | de 10 | à 15 % |

| | | |
|---|---|---|
| *(en quantité suffisante pour 100) | | |

On notera
- que les valeurs minimales des pigments colorés (noir compris) correspondent aux encres à faible intensité de couleurs utilisées en général en multichromie et que les valeurs maximales correspondent aux encres de couleurs monochromes « à plat »,
- que les encres à pigments noirs (KEYSTONE) sont en moyenne deux fois plus chargés en pigments,
- que la concentration poids en agent dispersant est de l'ordre de la moitié de la concentration en poids en pigments colorés secs.

A titre d'exemples non limitatifs,
- la composition en %poids pour un Bleu Mat normalement destiné à la quadrichromie est la suivante :

| | |
|---|---|
| Base d'encre PRINTING TO/10 | 69,70% |
| Pigments Turquoise SUBLAPRINT 70075 | 4,50% |
| Agent Dispersant DISPERBYK 161 | 2,25% |
| Agent Gélifiant | 2,00% |
| Agent Matant | 8,00% |
| Diluant* PRINTING TO/10 A | 13,55% |

| | |
|---|---|
| *(en quantité suffisante pour 100) | |

- et la composition en %poids pour un Bleu Mat destiné à la monochromie est la suivante :

| | |
|---|---|
| Base d'encre PRINTING TO/10 | 62,00% |
| Pigments Turquoise SUBLAPRINT 70075 | 9,50% |
| Agent Dispersant DISPERBYK 161 | 4,70% |
| Agent Gélifiant | 2,00% |
| Agent Matant | 7,00% |
| Diluant* PRINTING TO/10 A | 14,80% |

| | |
|---|---|
| *(en quantité suffisante pour 100) | |

Dans la pratique les pigments colorés et les agents dispersant et gélifiant sont mélangés, dans des mélangeurs à billes, à une quantité de résine de l'ordre de la moitié de la quantité totale de résine jusqu'à obtenir une préparation intermédiaire avec dispersion fine et homogène des pigments. Le complément de résine avec l'agent matant et le diluant sont mélangés à la préparation intermédiaire pour donner la préparation finale de viscosité, densité (en l'espèce 1,080) et faible brillance désirées.

Une fois le jeton complètement marqué par tampographie avec des encres à pigments sans liant décrites ci-avant, on procède à la phase de sublimation. A cet effet le jeton est placé dans une enceinte chauffante entre 145 et 160°C (dans un four très bien ventilé à chaleur tournante avec circulation d'air) pendant une durée d'une dizaine de minutes, en l'occurrence environ 12 minutes à 150°C pour un jeton en PBT. Chaque jeton est posé par quatre pointes de contact sur une bande de circulation sans fin de façon à permettre quasiment la même exposition à l'air chaud pour les deux faces du jeton, la bande de circulation défilant à vitesse constante selon un cheminement identique pour tous les jetons d'un même lot pour assurer l'uniformité du décor final des jetons. Compte tenu du niveau de la température de durcissement de la base transparente, le durcissement progressif de la base intervient préalablement à la sublimation des pigments. La base en l'état de durcissement de plus en plus avancé résiste à cette température de sublimation et fait fonction d'écran pour les vapeurs des pigments qui peuvent ainsi migrer dans la matière du jeton en surface sur une ou deux dizaines de microns. L'effet d'écran est d'autant plus remarquable que la chaleur pénètre à partir de la surface externe de la couche d'encre et que le durcissement est également progressif de l'extérieur vers l'intérieur. On notera qu'un durcissement total trop rapide aurait pour effet de piéger les pigments à l'intérieur de la base empêchant quasiment toute migration.

De très bons résultats (couleurs vives et absences de bavures latérales) ont été obtenus avec des encres sans liant du type décrit ci-avant sur des jetons PBT (chargé d'oxyde de zinc et de fibres de Wollastonite) passés au four à 150°C pendant 12 minutes.

En pratique des essais doivent entre fait pour chaque type d'encre et chaque type de matière du corps de jeton en jouant sur la température du four et le temps de passage au four.

Bien entendu, si la température de chauffage reste en général voisine de la température de sublimation des pigments (entre 130 et 180°C), la durée du chauffage peut varier assez sensiblement en fonction de la matière du jeton, de la base d'encre de tampographie utilisée, du nombre et de l'épaisseur des couches d'encres, de la nature des pigments et de la présence éventuelle d'un durcisseur et/ou de charges.

Sans sortir du cadre de l'invention, d'autre variantes de mise en oeuvre utilisent des moyens de chauffage différents par exemple par exposition au rayonnement infrarouge (chauffage en général unilatéral adapté pour la sublimation face par face) ou par utilisation d'une membrane souple chauffante sous vide dans laquelle est placé le jeton (chauffage sur tout l'extérieur du jeton).

De façon optionnelle la couche de base transparente durcie peut être traitée en surface (traitement mécanique ou physico-chimique) pour modifier ses propriétés de surface (traitement antidérapant) ou son aspect visuel (réduction du brillant) ou même être éliminée partiellement ou totalement en général par utilisation d'un solvant de nettoyage d'encre.

### Les encres à liant :

Selon le second mode de mise oeuvre particulier de l'invention (encres à liant) on utilise des encres monocolores sublimables obtenues par mélange d'une base d'encre de tampographie transparente durcissable (ou d'un composé analogue) éventuellement accompagnée de diluant et d'une préparation pigmentée fluide comportant des pigments colorés sublimables dispersés dans un liant.

Parmi les préparations pigmentées sublimables disponibles sur le marché et utilisables dans la présente invention on peut citer les préparations pigmentées sublimables à partir de 130°C entrant dans la composition d'encres sublimables utilisables pour l'impression par offset ou sérigraphie des calques ou transferts de sublimation, notamment les préparations pigmentées sublimables de la société ATS COLOR (Bolzano Vicentino, Italie) et les préparations pigmentées sublimables des sociétés SERICOL et TIFLEX en France, étant fait remarquer que les préparations type "offset" donnent en général plus de luminosité au décor final que les préparations "sérigraphie" et sont intéressantes pour la multichromie.

A titre d'exemple on utilise de façon avantageuse une encre monocolore sublimable à liant selon l'invention de composition de référence suivante (en pourcentage poids du produit ou mélange final):
- entre 20 et 40% de préparation pigmentée monocolore sublimable;
- entre 40 et 65% de base d'encre de tampographie transparente durcissable; et
- entre 10 et 35% de diluant de la base d'encre de tampographie transparente.

Plus particulièrement et toujours à titre d'exemple non limitatif une composition en %poids type utilisant de l'encre de sublimation comme liant est donnée ci-après:

| | |
|---|---|
| Base d'Encre TAMPOPRINT R | 48,00% |
| Agent matant AEROSIL 200 | 1,50% |
| Encre Offset de Sublimation d'ATS COLOR | 24,00% |
| Diluant* VDS 380 | 26,50% |

| | |
|---|---|
| *(en quantité suffisante pour 100) | |

La phase de sublimation pour des jetons marqués avec des encres de type avec liant utilise sensiblement le même type de four que précédemment avec température un peu plus basse (de l'ordre de 120-130°C) et avec de temps de passage d'une dizaine de minutes.

D'une façon générale une durée de chauffage insuffisante donne une sublimation incomplète (couleurs pâles) et une durée de chauffage continu trop longue provoque des "bavures" par migration latérale des pigments dans la matière du jeton. Un chauffage intermittent par périodes successives de quelques minutes séparées par un intervalle de refroidissement peut s'avérer intéressant.

A titre d'exemple non limitatif, des résultats intéressants avec des encres de type à liant ont été obtenus, entre autres, sur du PBT et du POM avec une composition de marquage selon la composition de référence donnée juste ci-avant à base de préparation pigmentée de type "Offset" de la société ATS COLOR, de base d'encre de tampographie transparente de type R de la société TAMPOPRINT (sans agent durcisseur additionnel), et de diluant VDS 380 également fourni par la société TAMPOPRINT, avec une profondeur de gravure de 20µm et des temps de durcissement en enceinte chauffante à 120°C de 8 minutes pour le PBT et de 12 minutes pour le POM. Toutefois les couleurs obtenues avec des encres à liant restent plus pâles que celles obtenues avec des encres de type sans liant. De plus, la présence de liant a tendance à augmenter les risques de bavures latérales au sein de la couche d'encre elle-même pendant son durcissement. L'intérêt principal des encres à liant résulte de la réduction de la température de sublimation des pigments par rapport aux encres sans liant et par voie de conséquence leur possibilité d'utilisation sur des objets-supports en matière plastique de faible épaisseur (inférieure au millimètre) et/ou de faible résistance à la température, sans risque de déformation du corps de l'objet-support pendant la phase de sublimation.

Sans sortir du cadre de l'invention la composition de marquage de référence pour des encres avec ou sans liant peut être modifiée selon les effets recherchés et les conditions particulières rencontrées:
- En premier lieu, un agent durcisseur additionnel est associé à la base d'encre tampographie transparente jusqu'à une proportion en poids de 1 partie de durcisseur pour 4 parties de base. Cet agent pour effet de réduire la température de durcissement du mélange résultant et éventuellement la durée du chauffage de sublimation. L'agent durcisseur a également pour effet de créer une couche dure et brillante de base durcie en surface du marquage et peut ainsi apporter une protection intéressante pour certains décors, notamment des décors type photo en quadrichromie, toutefois cette couche durcie est en général assez glissante. Par exemple le durcisseur type LMN 1 de la société TAMPOPRINT peut être utilisé avec la base transparente de type R de cette même société.
- En second lieu des additifs ou charges sont ajoutés à l'encre de tampographie monocolore pour donner un caractère antidérapant à la surface du décor final et/ou réduire son aspect brillant; on utilise à cet effet de fines poudres minérales, des billes de verre ou de silice ou d'autres agents matants.

Il est à noter que sans sortir du cadre de l'invention, le procédé de marquage selon l'invention prévoit également pour la phase de tampographie la tampographie séparée des composants pigmentés monocolores (associés à un agent de transfert par tampographie quelconque pour donner une composition de marquage monochrome ou multichrome) suivie du dépôt de préférence par tampographie d'une couche externe du composant durcissable. A titre de variante le couche externe peut également être déposée par d'autres procédés tels que la sérigraphie ou la pulvérisation.

## Revendications

1. Procédé de marquage par tampographie et sublimation d'un objet-support en matière plastique ou à revêtement de surface en matière plastique, **caractérisé par**:
- une phase de tampographie avec le dépôt sur l'objet-support en une ou plusieurs opérations de tampographie d'une composition de marquage monochrome ou multichrome comprenant au moins un composant pigmenté monocolore comportant de fines particules d'au moins un pigment coloré monocolore sublimable, ladite composition incorporant un composant durcissable résistant à la température de sublimation du ou des pigments colorés de la composition de marquage; et
- une phase de chauffage de sublimation de l'objet-support, de la composition de marquage tampographiée et du composant durcissable incorporé à la composition à une température au moins égale à la température de sublimation des pigments colorés, le composant durcissable présentant une température de durcissement inférieure à la température de sublimation du ou des pigments pour obtenir un durcissement progressif dudit composant durcissable préalablement au démarrage de la sublimation du ou des pigments colorés.

2. Procédé de marquage par tampographie et sublimation d'un objet-support en matière plastique ou à revêtement de surface en matière plastique, **caractérisé par**:
- une phase de tampographie avec le dépôt sur l'objet-support en une ou plusieurs opérations de tampographie d'une composition de marquage monochrome ou multichrome comprenant au moins un composant pigmenté monocolore comportant de fines particules d'au moins un pigment coloré monocolore sublimable, ladite composition étant recouverte d'un composant durcissable, lequel composant durcissable étant résistant à la température de sublimation du ou des pigments colorés de la composition de marquage; et
- une phase de chauffage de sublimation de l'objet-support, de la composition de marquage tampographiée et du composant durcissable disposé en couverture, à une température au moins égale à la température de sublimation des pigments colorés, le composant durcissable présentant une température de durcissement inférieure à la température de sublimation du ou des pigments pour obtenir un durcissement progressif dudit composant durcissable préalablement au démarrage de la sublimation du ou des pigments colorés.

3. Procédé selon la revendication 2, **caractérisé en ce que** ledit composant durcissable est déposé par tampographie ou par d'autres procédés tels que notamment la sérigraphie ou la pulvérisation.

4. Procédé selon l'une des revendications 1 à 3, **caractérisé en ce que** ledit composant durcissable est principalement constitué d'une base d'encre de tampographie transparente durcissable ou d'un composé analogue.

5. Procédé selon la revendication 4, **caractérisé en ce que** ladite base d'encre de tampographie transparente ou le composé analogue présente, sans durcisseur additionnel, une température de durcissement comprise entre 60 et 100°C, de préférence de l'ordre de 80°C.

6. Procédé selon l'une des revendications 1 à 5, **caractérisé en ce que** le composant pigmenté est constitué de fines particules d'au moins un pigment coloré monocolore sublimable susceptibles d'être dispersées directement dans le composant durcissable sans liant.

7. Procédé selon la revendication 6 **caractérisé par** au moins une opération de dépôt de tampographie d'une composition d'encre monocolore obtenue par mélange sans liant des particules de pigment sublimable constituant le composant pigmenté monocolore et de la base d'encre de tampographie transparente éventuellement accompagnée de diluant.

8. Procédé selon la revendication 7, **caractérisé en ce que** le chauffage de sublimation est réalisé en enceinte chauffante portée à une température comprise entre 145°C et 160°C pendant une dizaine de minutes, de préférence 12 minutes à 150°C.

9. Procédé selon l'une des revendications 1 à 5 **caractérisé par** au moins une opération de dépôt de tampographie d'une composition d'encre monocolore obtenue par mélange d'un composant pigmenté monocolore obtenu par dispersion de fines particules d'au moins un pigment coloré sublimable dans un liant et de la base d'encre de tampographie transparente éventuellement accompagnée de diluant.

10. Procédé selon la revendication 9, **caractérisé en ce que** le chauffage de sublimation est réalisé en enceinte chauffante portée à une température comprise entre 120°C et 130°C pendant une dizaine de minutes.

11. Procédé selon l'une des revendications 7 et 9 **caractérisé en ce que** le cliché utilisé pour l'opération de dépôt par tampographie de ladite composition d'encre monocolore est gravé à faible profondeur, de préférence de l'ordre de 20 à 30 µm.

12. Procédé selon l'une des revendications 8 et 10 **caractérisé en ce que** lesdits objets-supports sont déplacés à vitesse constante dans ladite enceinte selon sensiblement le même cheminement.

13. Procédé de marquage selon l'une des revendications 1 à 11, **caractérisé en ce que** le chauffage de sublimation est réalisé à l'aide d'une membrane chauffante sous vide.

14. Procédé selon l'une des revendications 4 et 5, **caractérisé en ce que** la phase de chauffage de sublimation est suivie d'une opération destinée traiter en surface et/ou à éliminer partiellement ou totalement le film durci de la base d'encre de tampographie transparente ou du composé analogue.

15. Procédé selon l'une des revendications précédentes, utilisable pour le marquage d'un décor de une à quatre couleurs d'un jeton de jeu en matière plastique, **caractérisé en ce que** les deux faces et la tranche du jeton sont préalablement tampographiées avant une unique opération de chauffage de sublimation.

16. Procédé selon l'une des revendications précédentes, **caractérisé en ce que** le corps dudit objet-support est réalisé en matière plastique chargée de charge minérale, notamment d'oxyde de zinc et/ou de fibres de Wollastonite.

17. Procédé selon la revendication 16 **caractérisé en ce que** le corps dudit objet-support est réalisé en polyamide, en polyester, notamment en polybutylène téréphtalate, ou en polyacétal polyoxyméthylène.

18. Procédé selon l'une des revendications 1 à 15, **caractérisé en ce** le corps dudit objet-support porte un revêtement constitué de vernis polyester transparent ou monochrome.

19. Encre de tampographie sublimable utilisable notamment pour la mise oeuvre du procédé de marquage selon l'une des revendications précédentes, **caractérisée en ce qu'**elle comprend une base d'encre de tampographie transparente durcissable éventuellement accompagnée de diluant et au moins un pigment coloré sublimable, la base d'encre de tampographie transparente, résistante à la température de sublimation du ou des pigments, présentant une température de durcissement inférieure à la température de sublimation du ou des pigments pour permettre le commencement d'une phase de durcissement progressif du film d'encre avant le commencement de la sublimation du ou des pigments colorés.

20. Encre selon la revendication 19, **caractérisée en ce que** ladite base d'encre de tampographie transparente présente, sans durcisseur additionnel, une température de durcissement comprise entre 60 et 100°C, de préférence de l'ordre de 80°C.

21. Encre selon la revendication 20, **caractérisée en ce que** ladite base d'encre est principalement constituée d'un ou plusieurs composés acryliques à faible viscosité et à solvant ou diluant léger non aqueux

22. Encre selon l'une des revendications 19 à 21, **caractérisée en ce qu'**elle est obtenue par mélange de la base d'encre de tampographie transparente, éventuellement accompagné de diluant, avec des particules d'au moins un pigment coloré monocolore sublimable dispersées sans liant.

23. Encre selon la revendication 22, **caractérisée en ce que** la concentration en pigments secs colorés sublimables est comprise entre 4 et 20% en poids du produit final, le complément étant principalement constitué de ladite base d'encre de tampographie transparente et de diluant en concentration comprise entre 10 et 25 % en poids du produit final.

24. Encre selon l'une des revendications 19 à 21, **caractérisée en ce qu'**elle est obtenue par mélange de la base d'encre de tampographie transparente éventuellement accompagné de diluant avec un composant pigmenté monocolore comportant de fines particules d'au moins un pigment coloré sublimable dispersées dans un liant liquide.

25. Encre selon la revendication 24, **caractérisée en ce que** ledit composant pigmenté est constitué par la préparation pigmentée pour encre sublimable utilisable pour l'impression offset de calques ou transferts de sublimation.

26. Encre selon la revendication 24, **caractérisée en ce que** ledit composant pigmenté est constitué par la préparation pigmentée pour une encre sublimable utilisable pour l'impression par sérigraphie de calques ou transferts de sublimation.

27. Encre selon l'une des revendications 24 à 26, **caractérisée en ce que** la concentration du composant pigmenté monocolore comportant de fines particules d'au moins un pigment coloré sublimable dispersées dans un liant liquide est comprise entre 20 et 40% en poids du produit final, le complément étant principalement constitué de ladite base d'encre de tampographie transparente et de diluant en concentration comprise entre 10 et 30% en poids du produit final.

28. Encre selon l'une des revendications 19 à 27, **caractérisé en ce que** ladite base d'encre de tampographie transparente comporte au moins un additif ou une charge lui conférant des propriétés antidérapantes et/ou d'atténuation du brillant.

## Patentansprüche

1. Tampon- und Sublimations-Druckverfahren für die Kennzeichnung eines Druckguts aus Kunststoff oder mit Kunststoffbeschichtung, **gekennzeichnet durch**:
- eine Tampondruckphase, bei der in einem oder mehreren Tampondruckgängen, ein ein- oder mehrfarbiges Kennzeichnungssystem, das aus mindestens einer einfarbigen pigmentierten Komponente besteht, die Feinpartikel von mindestens einem sublimierbaren einfarbigen Farbpigment enthält, auf das Druckgut aufgetragen wird, wobei dieses System eine härtende Komponente enthält, die der Sublimationstemperatur des oder der Farbpigmente des Kennzeichnungssystems standhält, und
- eine Phase der Sublimationserhitzung des Druckguts, des tampongedruckten Kennzeichnungssystems und der härtenden Komponente, die in dem System enthalten ist, bei einer Temperatur, die mindestens der Sublimationstemperatur der Farbpigmente entspricht,
wobei die Aushärtungstemperatur der härtenden Komponente kleiner ist, als die Sublimationstemperatur des oder der Pigmente, so dass diese härtende Komponente vor Beginn der Sublimation des oder der Farbpigmente schrittweise aushärtet.

2. Tampon- und Sublimations-Druckverfahren für die Kennzeichnung eines Druckguts aus Kunststoff oder mit Kunststoffbeschichtung, **gekennzeichnet durch**:
- eine Tampondruckphase, bei der in einem oder mehreren Tampondruckgängen, ein ein- oder mehrfarbiges Kennzeichnungssystem, das aus mindestens einer einfarbigen pigmentierten Komponente besteht, die Feinpartikel mindestens eines sublimierbaren einfarbigen Farbpigments enthält, auf das Druckgut aufgetragen wird, wobei über dieses System eine härtende Komponente aufgetragen wird, die der Sublimationstemperatur des oder der Farbpigmente des Kennzeichnungssystems standhält, und
- eine Phase der Sublimationserhitzung des Druckguts, des tampongedruckten Kennzeichnungssystems und der härtenden Komponente, die in dem System enthalten ist, bei einer Temperatur, die mindestens der Sublimationstemperatur der Farbpigmente entspricht,
wobei die Aushärtungstemperatur der härtenden Komponente kleiner ist, als die Sublimationstemperatur des oder der Pigmente, so dass diese härtende Komponente vor Beginn der Sublimation des oder der Farbpigmente schrittweise aushärtet.

3. Verfahren nach Anspruch 2, **dadurch gekennzeichnet, dass** die besagte härtende Komponente mittels Tampondruck oder sonstiger Verfahren aufgedruckt wird, wie insbesondere Siebdruck oder Spritzverfahren.

4. Verfahren nach einem der Ansprüche 1 bis 3, **dadurch gekennzeichnet, dass** die besagte härtende Komponente im Wesentlichen aus einer Basis aus härtender transparenter Tampondruckfarbe oder einer entsprechenden Substanz besteht.

5. Verfahren nach Anspruch 4, **dadurch gekennzeichnet, dass** die besagte Basis aus transparenter Tampondruckfarbe oder die entsprechende Substanz, ohne zusätzlichen Härter, eine Aushärtungstemperatur zwischen 60 und 100 °C aufweist, vorzugsweise um 80 °C.

6. Verfahren nach einem der Ansprüche 1 bis 5, **dadurch gekennzeichnet, dass** die pigmentierte Komponente aus Feinpartikeln besteht, die aus mindestens einem sublimierbaren einfarbigen Farbpigment bestehen, und ohne Bindemittel direkt in der härtenden Komponente dispergiert werden können.

7. Verfahren nach Anspruch 6, **gekennzeichnet durch** mindestens einen Tampondruckgang zum Auftrag eines einfarbigen Farbsystems, hergestellt **durch** Mischen, ohne Bindemittel, der sublimierbaren Pigmentpartikel, die die einfarbige pigmentierte Komponente bilden, mit der transparenten Tampondruckfarbenbasis, gegebenenfalls mit einem Verdünner.

8. Verfahren nach Anspruch 7, **dadurch gekennzeichnet, dass** die Sublimationserhitzung in einer Heizkammer erfolgt, bei einer Temperatur zwischen 145 °C und 160 °C, über rund zehn Minuten, vorzugsweise über 12 Minuten bei 150 °C.

9. Verfahren nach einem der Ansprüche 1 bis 5, **gekennzeichnet durch** mindestens einen Tampondruckgang zum Auftrag eines einfarbigen Farbsystems, hergestellt **durch** Mischen einer einfarbigen pigmentierten Komponente, die **durch** Dispersion der Feinpartikel mindestens eines sublimierbaren Farbpigments in einem Bindemittel erzielt wird, mit der transparenten Tampondruckfarbenbasis, gegebenenfalls mit einem Verdünner.

10. Verfahren nach Anspruch 9, **dadurch gekennzeichnet, dass** die Sublimationserhitzung in einer Heizkammer erfolgt, bei einer Temperatur zwischen 120°C und 130 °C, über rund zehn Minuten.

11. Verfahren nach einem der Ansprüche 7 und 9, **dadurch gekennzeichnet, dass** das für den Auftrag des besagten einfarbigen Farbsystems mittels Tampondruck verwendete Klischee eine geringe Ätztiefe hat, vorzugsweise 20 bis 30 µm.

12. Verfahren nach einem der Ansprüche 8 und 10, **dadurch gekennzeichnet, dass** die besagten Druckgüter die besagte Kammer mit konstanter Geschwindigkeit entlang einem ungefähr gleichen Weg durchlaufen.

13. Kennzeichnungsverfahren nach einem der Ansprüche 1 bis 11, **dadurch gekennzeichnet, dass** die Sublimationserhitzung mit Hilfe einer Heizmembran unter Vakuum erfolgt.

14. Verfahren nach einem der Ansprüche 4 und 5, **dadurch gekennzeichnet, dass** auf die Phase der Sublimationserhitzung ein Arbeitsgang zur Oberflächenbehandlung bzw. zur teilweisen oder vollständigen Entfernung des ausgehärteten Farbfilms der transparenten Tampondruckfarbenbasis oder der entsprechenden Substanz folgt.

15. Verfahren nach einem der vorhergehenden Ansprüche, das zur Kennzeichnung mit einem ein- bis vierfarbigen Dekor für ein Spieljeton aus Kunststoff angewendet werden kann und **dadurch gekennzeichnet ist, dass** die beiden Seiten und der Rand des Jetons, vor einem einzigen Arbeitsgang der Sublimationserhitzung, zuvor tamponbedruckt werden.

16. Verfahren nach einem der vorhergehenden Ansprüche, **dadurch gekennzeichnet, dass** der Körper des besagten Druckguts aus Kunststoff besteht, der mit einem mineralischen Füllstoff verstärkt ist, insbesondere mit Zinkoxid bzw. mit Wollastonitfasern.

17. Verfahren nach Anspruch 16, **dadurch gekennzeichnet, dass** der Körper des besagten Druckguts aus Polyamid, aus Polyester, insbesondere aus Polybutylenterephthalat oder aus Polyacetal, Polyformaldehyd besteht.

18. Verfahren nach einem der Ansprüche 1 bis 15, **dadurch gekennzeichnet, dass** der Körper des besagten Druckguts mit einem transparenten oder einfarbigen Polyesterlack beschichtet ist.

19. Sublimierbare Tampondruckfarbe für die Anwendung des Kennzeichnungsverfahrens nach einem der vorstehenden Ansprüche, **dadurch gekennzeichnet, dass** sie eine härtende transparente Tampondruckfarbenbasis gegebenenfalls mit einem Verdünner und mindestens ein sublimierbares Farbpigment enthält, und dass diese transparente Tampondruckfarbenbasis der Sublimationstemperatur des oder der Pigmente standhält und eine Aushärtungstemperatur aufweist, die unter der Sublimationstemperatur des oder der Pigmente liegt, so dass eine Phase des schrittweisen Aushärtens des Farbfilms beginnen kann, bevor die Sublimation des oder der Farbpigmente beginnt.

20. Farbe nach Anspruch 19, **dadurch gekennzeichnet, dass** die besagte Basis aus transparenter Tampondruckfarbe, ohne zusätzlichen Härter, eine Aushärtungstemperatur zwischen 60 und 100 °C aufweist, vorzugsweise um 80 °C.

21. Farbe nach Anspruch 20, **dadurch gekennzeichnet, dass** die besagte Farbbasis im Wesentlichen aus einer oder mehreren niedrigviskosen Komponenten auf Acrylbasis besteht, die leichte, nicht wässrige Löse- oder Verdünnungsmittel enthalten.

22. Farbe nach einem der Ansprüche 19 bis 21, **dadurch gekennzeichnet, dass** sie durch Mischen der Basis aus transparenter Tampondruckfarbe, gegebenenfalls mit einem Verdünner, mit Partikeln hergestellt wird, die aus mindestens einem sublimierbaren einfarbigen Farbpigment bestehen, und die ohne Bindemittel dispergiert werden.

23. Farbe nach Anspruch 22, **dadurch gekennzeichnet, dass** die Konzentration der sublimierbaren Trockenpigmente bei zwischen 4 und 20 Gewichtprozent des Endprodukts liegt, wobei die Zugabe im Wesentlichen aus der besagten transparenten Tampondruckfarbenbasis und dem Verdünner in einer Konzentration zwischen 10 und 25 Gewichtprozent des Endprodukts besteht.

24. Farbe nach einem der Ansprüche 19 bis 21, **dadurch gekennzeichnet, dass** sie durch Mischen der Basis aus transparenter Tampondruckfarbe, gegebenenfalls mit einem Verdünner, mit einer einfarbigen pigmentierten Komponente hergestellt wird, die Feinpartikel mindestens eines sublimierbaren Farbpigments enthält, die in einem flüssigen Bindemittel dispergiert werden.

25. Farbe nach Anspruch 24, **dadurch gekennzeichnet, dass** die besagte pigmentierte Komponente aus der pigmentierten Zubereitung für sublimierbare Farbe besteht, die für den Offsetdruck von Pausen oder für Sublimationstransfers verwendet werden kann.

26. Farbe nach Anspruch 24, **dadurch gekennzeichnet, dass** die besagte pigmentierte Komponente aus der pigmentierten Zubereitung für eine sublimierbare Farbe besteht, die für den Siebdruck von Pausen oder für Sublimationstransfers verwendet werden kann.

27. Farbe nach einem der Ansprüche 24 bis 26, **dadurch gekennzeichnet, dass** die Konzentration der einfarbigen pigmentierten Komponente, die Feinpartikel mindestens eines sublimierbaren Farbpigments enthält, die in einem flüssigen Bindemittel dispergiert sind, bei zwischen 20 und 40 Gewichtprozent des Endprodukts liegt, wobei die Zugabe im Wesentlichen aus der besagten transparenten Tampondruckfarbenbasis und dem Verdünner in einer Konzentration zwischen 10 und 30 Gewichtprozent des Endprodukts besteht.

28. Farbe nach einem der Ansprüche 19 bis 27, **dadurch gekennzeichnet, dass** die besagte Basis aus transparenter Tampondruckfarbe mindestens ein Additiv oder einen Füllstoff enthält, das oder der ihr rutschfeste bzw. glanzmindernde Eigenschaften verleiht.

## Claims

1. Method for marking by pad-printing and sublimation a support-object made of plastic or having a surface coating made of plastic, **characterized by** :
a pad-printing phase with the deposit on the support-object in one or more pad-printing operations of a monochrome or polychrome marking composition having at least one monocolor pigmented component including fine particles of at least one sublimable monocolor colored pigment, the said composition incorporating a hardening component being able to resist the sublimation temperature of the colored pigment(s) of the marking composition; and
a sublimation heating phase of the support-object, the pad-printed marking composition and the hardening component incorporated into the composition, at a temperature that is at least equal to the sublimation temperature of the colored pigments, said hardening component having a hardening temperature lower than the sublimation temperature of the pigment(s) to obtain a progressive hardening of the hardening component prior to starting the sublimation of the colored pigment(s).

2. Method for marking by pad-printing and sublimation a support-object made of plastic or having a surface coating made of plastic, **characterized by** :
a pad-printing phase with the deposit on the support-object in one or more pad-printing operations of a monochrome or polychrome marking composition having at least one monocolor pigmented component including fine particles of at least one sublimable monocolor colored pigment, the said composition being coated with a hardening component, said hardening component being able to resist the sublimation temperature of the colored pigment(s) of the marking composition; and
a sublimation heating phase of the support-object, the pad-printed marking composition and the hardening component arranged as a coating, at a temperature that is at least equal to the sublimation temperature of the colored pigments, said hardening component having a hardening temperature lower than the sublimation temperature of the pigment(s) to obtain a progressive hardening of the hardening component prior to starting the sublimation of the colored pigment(s).

3. Method according to claim 2, **characterized in that** said hardening component is placed by pad-printing or by other methods such as among others screen-printing or spraying.

4. Method according to anyone of claims 1 to 3, **characterized in that** the said hardening component is mainly constituted of a hardening transparent pad-printing ink base or of a similar compound.

5. Method according to claim 4, **characterized in that** the said transparent pad-printing ink base or similar compound has, without additional hardening agent, a hardening temperature between 60 and 100°C, preferably on the order of 80°C.

6. Method according to anyone of claims 1 to 5, **characterized in that** the pigmented component is constituted of fine particles of sublimable monocolor colored pigments capable of being dispersed directly in the hardening component without binder.

7. Method according to claim 6, **characterized by** at least one pad-printing operation of depositing a monocolor ink composition obtained by a mixture, without binder, of the particles of sublimable pigment constituting the monocolor pigmented component and of the transparent pad-printing ink base, which may possibly be accompanied by a thinner.

8. Method according to claim 7, **characterized in that** the sublimation heating is carried out in a heating enclosure brought to a temperature between 145°C and 160°C for about ten minutes, preferably 12 minutes at 150°C.

9. Method according to anyone of claims 1 to 5, **characterized by** at least one pad-printing operation of depositing a monocolor ink composition obtained by a mixture of a monocolor pigmented component which is obtained by dispersing sublimable colored pigments in a binder and of the transparent pad-printing ink base possibly accompanied by a thinner.

10. Method according to claim 9, **characterized in that** sublimation heating is carried out in a heating enclosure brought to a temperature between 120°C and 130°C for ten minutes.

11. Method according to anyone of claims 7 and 9, **characterized in that** the plate used for the operation of depositing the said monocolor ink composition by pad-printing is etched to a small depth, preferably on the order of 20 to 30 µm.

12. Method according to anyone of claims 8 and 10, **characterized in that** the support-objects are displaced in the said enclosure on an endless band at a constant speed, substantially along the same path.

13. Method for marking according to anyone of claims 1 to 11, **characterized in that** the sublimation heating is obtained by using a heating membrane under vacuum.

14. Method according to anyone of claims 3 and 4, **characterized in that** the sublimation heating phase is followed by an operation adapted for the surface treatment and/or the partial or total elimination of the cured film of the transparent pad-printing ink base or of the similar compound.

15. Method according to anyone of the preceding claims, usable for the marking of a decoration having one to four colors on a gambling chip made of plastic, **characterized in that** the two faces and the side of the chip are pad-printed prior to a single sublimation heating operation.

16. Method according to anyone of the preceding claims, **characterized in that** the body of the said support object is made of plastic loaded with a mineral load, especially zinc oxide and/or Wollastonite fibers.

17. Method according to claim 16, **characterized in that** the body of the support object is made of polyamide, polyester, especially polybutylène téréphtalate, or polyacetal polyoxyméthylène.

18. Method according to anyone of claims 1 to 15, **characterized in that** the body of the support object bears a coating constituted of a transparent or monochrome polyester varnish.

19. Sublimable pad-printing ink usable among others to implement the marking method according to anyone of the preceding claims, **characterized by** including a hardening transparent pad-printing ink base, possibly accompanied by a thinner, and fine particles of at least one sublimable monocolor colored pigment, the transparent pad-printing ink base resisting the sublimation temperature of the pigment(s) and having a hardening temperature lower than the sublimation temperature of the pigment(s) in order to permit the beginning of a progressive hardening phase for the ink film prior to beginning the sublimation of the colored pigments.

20. Ink according to claim 19, **characterized in that** the hardening transparent pad-printing ink base has, without additional curing agent, a hardening temperature between 60 and 100°C, preferably on the order of 80°C.

21. Ink according to claim 20, **characterized in that** the said ink base is mainly constituted of one or several acrylic compounds having low viscosity and non-aqueous solvent or thinner.

22. Ink according to anyone of claims 19 to 21, **characterized by** being obtained by mixing the hardening transparent pad-printing ink base, possibly accompanied by a thinner, with particles of sublimable monocolor colored pigments dispersed without binder.

23. Ink according to claim 22, **characterized in that** the concentration of sublimable colored dried pigments is between 4 and 20% by weight of the final product, the complement being mainly constituted of the transparent pad-printing ink base and the thinner in a concentration between 10 and 25% by weight of the final product.

24. Ink according to anyone of claims 19 to 21, **characterized by** being obtained by mixing the transparent pad-printing ink base, possibly accompanied by a thinner, with a monocolor pigmented component having sublimable colored pigments dispersed in a liquid binder.

25. Ink according to claim 24, **characterized in that** the pigmented component is constituted by a pigmented preparation for sublimable ink that can be used for the offset printing of sublimation tracing papers or transfers.

26. Ink according to claim 24, **characterized in that** the pigmented component is constitued by a pigmented preparation for sublimable ink that can be used for the screen printing of sublimation tracing papers or transfers.

27. Ink according to anyone of claims 24 to 26, **characterized in that** the concentration of monocolor pigmented component including fine particles of at least one sublimable colored pigment dispersed in a liquid binder is between 20 and 40% by weight of the final product, the complement being mainly constituted of the transparent pad-printing ink base and of the thinner in a concentration between 10 and 30% by weight of the final product.

28. Ink according to anyone of the claims 19 to 27, **characterized in that** the said transparent pad-printing ink base advantageously has at least one additive or load providing it with non-slip and/or ink gloss attenuation properties.
